**Europäisches Patentamt**

(19) **European Patent Office**

**Office européen des brevets**

(11) Publication number : **0 392 292 B1**

(12) **EUROPEAN PATENT SPECIFICATION**

(45) Date of publication of patent specification :
30.12.92 Bulletin 92/53

(51) Int. Cl.⁵ : **B60T 7/20**

(21) Application number : **90106135.8**

(22) Date of filing : **30.03.90**

(54) **Mechanically operated drum brake for trailers, which disengages automatically during reversing.**

(30) Priority : **07.04.89 IT 4682389**

(43) Date of publication of application :
**17.10.90 Bulletin 90/42**

(45) Publication of the grant of the patent :
**30.12.92 Bulletin 92/53**

(84) Designated Contracting States :
**DE ES FR**

(56) References cited :
**DE-A- 2 436 085**
**DE-A- 3 210 322**
**GB-A- 2 188 110**

(73) Proprietor : **ELLEBI S.P.A.**
**Via Statale 63 189**
**I-42044 Gualtieri (Reggio Emilia) (IT)**

(72) Inventor : **Landini, Euro**
**Via Sibilla 13**
**I-42040 S. Vittoria (Reggio Emilia) (IT)**

(74) Representative : **Giambrocono, Alfonso, Dr. Ing.**
**Ing. A. Giambrocono & C. S.r.l. Via Rosolino Pilo 19/B**
**I-20129 Milano (IT)**

## Description

This invention relates to a mechanically operated drum brake for single or multi-axle trailers, and more particularly to a brake of this type which automatically disengages during reversing.

Current regulations in this sector require that a device be provided for automatically disengaging the braking action during trailer reversing. This was not a requirement of previous regulations, according to which to prevent braking during reversing (inevitable because of the particular inertia system used for brake operation in these cases) it was permitted to manually lock the brake operating mechanism of the trailer. However, to do this the operator had to leave the tractor and transfer to the trailer, on which the locking device was located. The locking device was released automatically on forward running.

Under the new regulations these operations must be controlled automatically by a device provided in the brake and operating to eliminate braking action when the direction of rotation of the wheels changes on commencing a reversing manoeuvre.

In addition this automatic device must not negatively influence the action of the parking brake, the efficiency of which must be guaranteed under all conditions.

A drum brake of the aforesaid type consists essentially of a mobile part rigid with the wheel and comprising a brake drum, and a fixed part connected to the trailer suspension and comprising a shoe backplate. This latter houses the brake shoes and their return springs.

An operating device which acts simultaneously on one end of a shoe and on the near end of the other shoe moves the shoes outwards by means of levers connects to a control cable. The linings of the shoes then press agains the drum to cause braking.

A drum brake having an automatic device, or collapsing mechanism, of the above-mentioned kind is disclosed in DE-A-2435085. In it the shoe ends, opposite to those on which the operating device acts, are beveled so that the two ends form an acute angle opened towards the centre of the drum brake. A roller is placed between said two beveled ends. The peripheral surface of the roller is in contact with the beveled ends. The roller periphery also abuts agains an inclined surface of an element fixable to the shoe backplate. During reversing after braking, the roller, urged by the two shoes, moves along the inclined surface of said element so that the distance from the roller to the brake drum increases. Therefore also the distance between the beveled ends of the shoes decreases so that the braking action ceases. At any rate, this drum brake is, as a whole, rather complex.

Another collapsing mechanism is disclosed in GB-A-2188110. The mechanism comprises first and second members located between opposite ends of a pair of brake shoes, said members are so connected that when the resultant force is applied to the member in one direction (forward motion), oppositely facing portions of the members are placed at a first distance apart, such that may hold respective ends of the pair of brake shoes at a corresponding distance apart. When the resultant force is applied to the member in an opposite direction (reversing), the members collapse towards each other such that said oppositely facing portions are placed at a second distance apart, less than said first distance , such that they may hold said respective ends of said pair of brake shoes at a correspondingly lesser distance apart.

The drum brake according to both DE-A-2436085 and GB-A-2188110 is rather complicated and therefore expensive.

A device is also normally provided to compensate for the wear of the constituent friction material of the linings.

In some drum brakes this wear compensation device comprises a metal box fixed to the shoe backplate, to enclose an adjustment wedge and guide it in a direction perpendicular to the shoe backplate, the wedge having two opposing sides inclined symmetrically about a plane of symmetry through the shoes. The adjustment wedge is movable to a certain extent in said direction. Each inclined side of the wedge is in contact with the single inclined face of a relative backing wedge, on the opposite face of which there rests the end of that. shoe opposite the one on which said operating device acts.

The adjustment wedge is fixed to a threaded shank which extends perpendicular to the shoe backplate and passes through a hole provided in said backplate. Onto that part of the shank which projects beyond the backplate there is screwed a nut which rests against the backplate. By screwing down the nut to a greater or lesser degree the position of the adjustment wedge can be adjusted to suitably widen the shoes so as to compensate for the wear of their linings.

The forces generated during braking are discharged onto said wear compensation device, whether the wheel rotates in one direction or the other.

The object of the present invention is to provide a drum brake of the aforesaid type comprising a device which automatically disengages the braking action on reversing, the drum brake being simpler and cheaper than that of the known drum brakes.

This object is attained according to the present invenzion by a drum brake in which the fixed part comprises also a collapsing mechanism which enables the brake shoes to move towards one another during reverse motion for overcoming the braking effect, characterized in that said collapsing mechanism comprises a metal box fixed to that side of the shoe backplate facing the shoes, said box enclosing:
- two mutually engaged wedges, the first wedge being translationally movable through a certain distance in a direction perpendicular to said shoe backplate, said first wedge having a first. face inclined to said shoe backplate and a second face perpendicular to said shoe backplate, the second wedge being translationally movable through a certain distance in a direction parallel to said shoe backplate and having a first face with the same inclination as the first face of the first wedge, with which it is kept in contact, and a second face parallel to said shoe backplate and in contact therewith, the directions of movement of the two wedges being contained within a plane substantially parallel to the direction in which the forces exerted by said operating device to move the shoes outwards act, the third face of the second wedge resting on that end of one of the two shoes distant from the end on which said operating device acts, the corresponding end of the other wedge resting directly on said box, the first wedge being translationally movable between a first position of normal operation in which the two relative ends of the shoes are at their maximum distance apart, and a second position in which said ends are at their mimimum distance apart; and

- elastic return means returning the first wedge to its first position when no force is exerted on said second wedge by the relative shoe.

In this manner, when said operating device is operated to move the shoes outwards, for example on braking the tractor vehicle to which the trailer is connected, and reversing is commenced, the direction of rotation of the trailer wheel changes with the result that the friction forces between the shoes and drum tend to discharge onto the shoe which rests on the second said wedge, so that this latter withdraws. The result is that the shoes approach each other and braking action ceases. The withdrawal of the second wedge causes the first wedge to move into its second position. To obtain this movement the return force exerted by said elastic means must be overcome, this however being a relatively small force compared with the carriage braking forces. In practice, during the entire reversing stage there is still a residual braking action due to said return force which, as stated, is however negligible and acts only during reversing, and is moreover contained within the limits laid down in the regulations.

When reversing ceases, the return force exerted by said elastic means returns the first wedge to its first position, so restoring the normal arrangement of the braking members.

According to a modification of the present invention, said wedge mechanism can also act as a device for compensating the wear of the shoe linings. For this, it is necessary only for the first position of the first wedge to be adjustable, which can be achieved very simply by well known means.

The invention will be more apparent on reading the description of one embodiment thereof given hereinafter by way of non-limiting example. In said description, reference is made to the accompanying drawings, in which:

Figure 1 is a front view of the drum brake according to the invention, the drum having been removed to show the internal members of the brake;

Figure 2 is a cross-section through the complete drum brake (ie also comprising the drum) taken on the line II-II of Figure 1;

Figure 3 is a cross-section therethrough on the line III-IIi of Figure 1;

Figure 4 is a cross-section therethrough on the line IV-IV of Figure 1, the brake members being in their normal operation arrangement; and

Figure 5 is a section analogous to that of Figure 4 but showing the brake members in their disengaged arrangement, corresponding to trailer reversal.

From the figures it can be seen that the mechanically operated drum brake 10 comprises a mobile part 12 rigid with the wheel (not shown) and comprising a drum 14 and a hub 16.

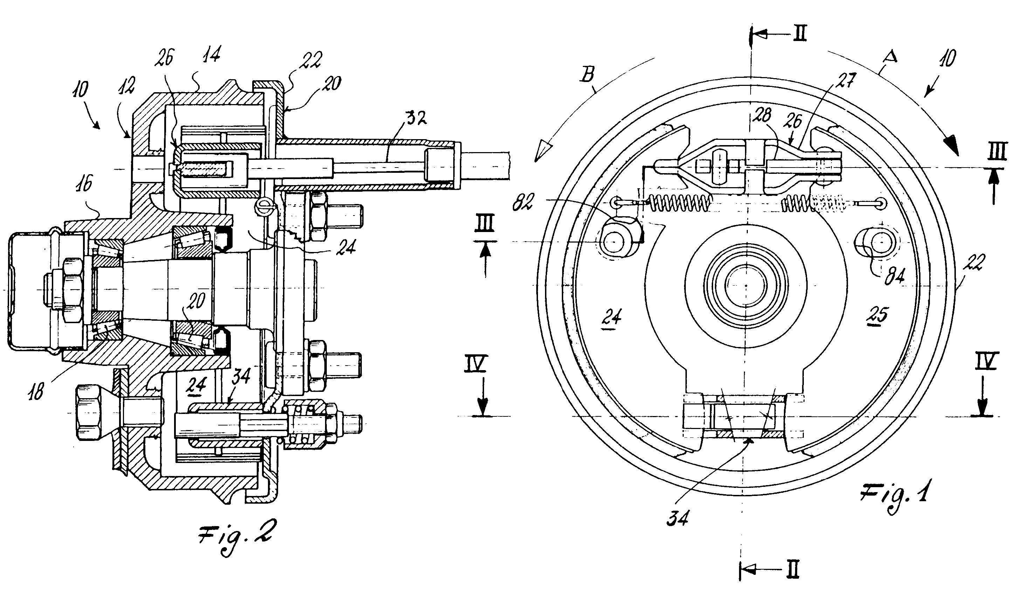

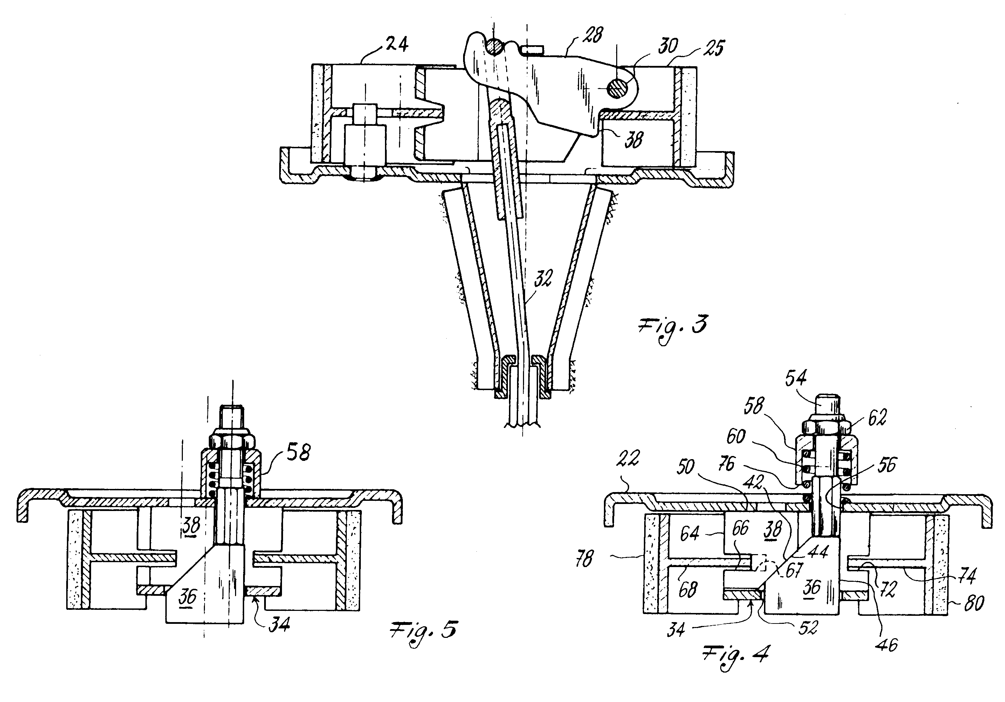

The brake also includes a fixed part 20 connected to the trailer suspension (not shown) and comprising a shoe backplate 22. This latter houses the shoes 24, 25, the upper ends of which are moved outwards during braking by a known brake operating device 26 (see Figures 1 and 3) consisting of a lever 28 rotatable about a pin 30 fixed to the casing 27. The lever 28 is operated by a cable 32 connected to the free end of the lever 28 and controlled by said inertia operating system (not shown).

As can be seen from Figure 1, on pulling the cable 32 the lever 28 rotates about the pin 30. A tooth 38 provided on the lever 28 and resting on the relative end of the shoe 25 in a position corresponding with the central rib 74 causes the shoes to move outwards, so that these press against the drum 14 to thus generate a braking action on the wheel. In moving outwards, the shoes 24, 25 pivot on the box 34 fixed to the shoe backplate 22, on which the forces induced by the braking action are therefore discharged.

The box 34 (see Figures 2, 4 and 5) encloses two mutually engaged wedges 36 and 38. The first wedge 36 has a first face 42 inclined at 45° to the shoe backplate 22, said first face 42 being in contact with a corresponding first face 44 of the second wedge 38. A second face 46 of the first wedge 36 is perpendicular to the shoe backplate 22. The second wedge 38 has a second face 50 in contact with the shoe backplate 22.

The first wedge 36 projects outwards from the box 34 through an aperture 52. It is fixed to a threaded shank 54 perpendicular to the shoe backplate 22. The shank 54 extends through a hole 56 provided in the shoe backplate 22 and projects therefrom. The shank 54 carries a coaxial spacer cap 58 enclosing a coaxial preloaded helical spring 60. One end of the spring 60 rests against the base of the cap 58 and its other end against the shoe backplate 22. The cap 60 is kept in position on the shank 54 by a nut 62 screwed onto the shank.

From the aforegoing it is apparent that the first wedge 36 can move translationally in a direction perpendicular to the shoe backplate 22 (see Figures 4 and 5) and consequently the second wedge 38 can move translationally parallel to this latter.

As can be seen from Figures 1, 4 and 5, a notch 66 is provided in a third side 64 of the second wedge 38 (the side perpendicular to is second side) to receive the end of a rib 68 of the shoe 24. A corresponding notch 67 is provided in the box 34 to allow the rib 68 to rest on the second wedge 38 instead of on the box 34. In a like manner, the rib 74 of the corresponding end of the shoe 25 is received in a notch 72 provided in the box 34 at the end distant from that containing the notch 67.

In Figure 4 the various members are shown in their normal operation arrangement. When the trailer is moving forward and the relative wheel therefore rotates in the direction indicated by the arrow A in Figure 1, the braking action induced by the operating device 26 occurs in the described manner, to discharge onto the box 34 via the rib 74.

In contrast, if reversing is about to take place (Figure 4) and the cable 32 is taut and thus exerting a braking action, the wheel tends to rotate in the direction of the arrow B (Figure 1).

The result is that the braking action is discharged from the shoe 24 via the rib 68 to the second wedge 38. this latter, under the action of this force, retracts towards the right with translational movement parallel to the shoe backplate 22. This causes the first wedge 36 to move outwards, and stop when the edge 76 of the cap 60 rests against the shoe backplate 22 (see Figure 5). As already explained, the retraction of the second wedge 38 results in a reduction in the braking force to a negligible value. The practical result is the automatic disengagement of the brake on reversing.

As also stated, the first wedge 36 can equally function as an adjustment wedge to compensate the wear of the brake linings 78, 80. This is done in the usual manner by using the nut 62 to adjust said first position (Figure 4) of the first wedge 36 and consequently the position of the second wedge 38 (which thus functions as as contrasting wedge). This thus adjusts the opening of the two shoes 24, 25 so that the surfaces of the relative linings 78, 80 are at the correct distance from the drum 14.

As can be seen from Figure 1, the centering slot 82 for the shoe 24 is slightly larger than the corresponding slot 84 for the shoe 25, to allow the shoe 24 to retract during reversing.

From the aforegoing it is apparent that with minimum modification to the normal brake lining wear compensation device already present in brakes of this known type, an extremely simple mechanism is obtained which in addition to its preceding function is also able to automatically disengage the brake of a reversing trailer.

The brake of the present invention can be conveniently used on all types of single or multi-axle trailer towed by a tractor vehicle, whatever their use.

From the aforegoing it is apparent that the structure of the brake according to the invention is such as not to influence the efficiency of the parking brake in any way, the operation of this latter being guaranteed under all conditions.

Other advantages of the brake according to the invention are the following:

- a very simple structure which is easily constructed and industrialized;
- negligible cost increase over known brakes of this type;
- take-up of the lining wear gap achieved in a manner practically identical to known brakes, with identical simultaneous automatic adjustment of the correct travel of the device to ensure efficiency of the parking brake under all conditions;
- facility for visually checking, in an immediate and very simple manner, the state of preservation and efficiency of the mechanism after the trailer has been at rest for lengthy periods.

As is apparent the described mechanism preserves total effectiveness of operation of the parking brake even under reversing conditions, because of the presence of the spacer cap 58 which acts as a travel limiter in the translational movement of the wedge element 36. By this means the relative requirement of the aforesaid regulations is also satisfied.

## Claims

1. A mechanically operated drum brake (10) for single or multi-axle trailers, consisting of a mobile part rigid with the wheel and comprising a brake drum (14), and a fixed part connected to the trailer suspension and comprising a shoe backplate (22) in addition to an operating device (26) arranged to move the shoes (24, 25) outwards, the fixed part comprising also a collapsing mechanism which enables the brake shoes (24, 25) to move towards one another during reverse motion for overcoming the braking effect, characterized in that said collapsing mechanism comprises a metal box (34) fixed to that side of the shoe backplate (22) facing the shoes, said box enclosing:

   - two mutually engaged wedges (36, 38), the first wedge (36) being translationally movable through a certain distance in a direction perpendicular to said shoe backplate (22), said first wedge (36) having a first face (42) inclined to said shoe backplate and a second face (46) perpendicular to said shoe backplate, the second wedge (38) being translationally movable through a certain distance in a direction parallel to said shoe backplate and having a first face (40) with the same inclination as the first face (42) of the first wedge (36), with which it is kept in contact, and a second face (50) parallel to said shoe backplate (22) and in contact therewith, the directions of movement of the two wedges (36,38) being contained within a plane substantially parallel to the direction in which the forces exerted by said operating device to move the shoes outwards act, the third face (64) of the second wedge (38) resting on that end (68) of one (24) of the two shoes distant from the end on which said operating device (26) acts, the corresponding end of the other wedge resting directly on said box (34), the first wedge (36) being translationally movable between a first position of normal operation in which the two relative ends (68, 74) of the shoes are at their maximum distance apart, and a second position in which said ends (68,74) are at their mimimum distance apart; and

- elastic return means (60) returning the first wedge (36) to its first position when no force is exerted on said second wedge (38) by the relative shoe (24).

2. A drum brake as claimed in claim 1, characterised in that the first position of the first wedge (36) is adjustable.

3. A drum brake as claimed in claim 2, characterised in that said elastic return means consist of a preloaded helical spring (60) wound coaxially about a threaded shank (54) fixed to the first wedge (36) and perpendicular to the shoe backplate (22), said shank (54) extending through a hole (56) provided in the shoe backplate (22) and projecting therefrom, one end of the spring (60) resting against the shoe backplate (22) and its other end against the base of a spacer cap (58) coaxial to the shank (54) and facing the shoe backplate (22).

**Patentansprüche**

1. Mechanisch betätigte Trommelbremse (10) für ein- oder mehrachsige Anhänger, bestehend aus einem beweglichen Teil (12), das mit dem Rad fest verbunden ist und eine Bremstrommel (14) umfaßt, und einem fest angebrachten Teil (20), das mit der Anhängeraufhängung verbunden ist und zusätzlich zu einer Betätigungseinrichtung (26), durch die die Bremsbacken (24, 25) nach außen bewegt werden, eine Halteplatte (22) umfaßt, wobei das fest angebrachte Teil (20) weiter einen Bewegungsmechanismus umfaßt, aufgrund dessen sich die Bremsbacken (24, 25) während einer Rückwärtsfahrt aufeinanderzubewegen können, um die Bremswirkung aufzuheben,

**dadurch gekennzeichnet**, daß dieser Bewegungsmechanismus eine Metallkammer (34) umfaßt, die an der in Richtung der Bremsbacken (24, 25) gelegenen Seite der Halteplatte (22) befestigt ist, wobei diese Kammer folgendes umfaßt:

- zwei in gegenseitigem Eingriff stehende Keile (36, 38), wobei der erste Keil (36) in einer zur Halteplatte (22) orthogonalen Richtung über eine bestimmte Distanz verschiebbar ist, wobei der erste Keil (36) eine erste, bezüglich der Halteplatte (22) geneigte Oberfläche (42) und eine zweite, zur Halteplatte (22) orthogonale Oberfläche (46) aufweist, wobei der zweite Keil (38) in einer zur Halteplatte (22) parallelen Richtung über eine bestimmte Distanz verschiebbar ist und eine erste Oberfläche (46) aufweist, die die gleiche Neigung wie die erste Oberfläche (42) des ersten Keiles (36) hat und mit dieser in Kontakt steht, und wobei der zweite Keil (38) eine zweite Oberfläche (50) aufweist, die zur Halteplatte (22) parallel verläuft und mit dieser in Kontakt steht, wobei die Bewegungsrichtungen der beiden Keile (36, 38) in einer Ebene liegen, die im wesentlichen zu jener Richtung parallel ist, in welche die von der Betätigungseinrichtung (26) ausgeübten Kräfte, durch die die Bremsbacken (24, 25) nach außen bewegt werden, wirken, wobei sich die dritte Oberfläche (64) des zweiten Keils (38) an jenem Ende (68) des einen Bremsbackens (24) befindet, das von dem Ende, an dem die Betätigungseinrichtung (26) wirkt, entfernt ist, wobei das entsprechende Ende des anderen Keils direkt an der Kammer (34) anliegt, wobei der erste Keil (36) bei normalem Betrieb zwischen einer ersten Stellung, in welcher die beiden relativen Enden (68, 74) der Bremsbacken (24, 25) den größten Abstand voneinander aufweisen und einer zweiten Stellung, in der die Enden (68, 74) den geringsten Abstand voneinander aufweisen, hin- und herbewegbar ist; und

- elastische Rückstellmittel (60), die den ersten Keil (36) in seine erste Position rückstellen, wenn durch die entsprechende Bremsbacke (24) auf den zweiten Keil (38) keine Kräfte wirken.

**2.** Trommelbremse gemäß Anspruch 1, dadurch gekennzeichnet, daß die erste Position des ersten Keils (36) verstellbar ist.

**3.** Trommelbremse gemäß Anspruch 2, dadurch gekennzeichnet, daß das elastische Rückstellmittel eine gespannte Schraubenfeder (60) ist, die koaxial um einen mit einem Gewinde versehenen Schaft (54) herumgeführt ist, der am ersten Keil (36) befestigt ist und senkrecht zur Halteplatte (22) verläuft, wobei dieser Schaft (54) sich durch eine Bohrung (56) hindurch erstreckt, welche in der Halteplatte (22) vorgesehen ist und von dieser hervorspringt, wobei das eine Ende der Feder (60) an der Halteplatte (22) anliegt und das andere Ende am Abstandhalter (58) koaxial zum Schaft (54) und in Richtung zur Halteplatte (22) anliegt.

## Revendications

**1.** Un frein à tambour fonctionnant mécaniquement (10) pour remorques à un ou plusieurs essieux, consistant en un élément mobile solidaire de la roue, et comprenant un tambour de frein (14), et en un élément fixe relié à la suspension de la remorque et comprenant une contre-plaque de sabot (22) en plus d'un dispositif actionneur (26) agencé pour déplacer les sabots (24, 25) vers l'extérieur, l'élément fixe comprenant également un mécanisme d'effacement qui permet aux sabots de frein (24, 25) de se déplacer l'un vers l'autre lors de mouvement inversé destiné à surmonter l'effet de freinage, le système étant caractérisé en ce que le dit mécanisme d'effacement comprend une boîte métallique (34) fixée sur le côté de la contre-plaque sabot (22) qui fait face aux sabots, la dite boîte incluant :

- deux coins engagés l'un avec l'autre (36, 38), le premier coin (36) étant mobile à translation sur une certaine distance dans une direction perpendiculaire à la dite contre-plaque de sabot (22), le dit premier coin (36) comprenant une première face (42) inclinée par rapport à la dite contre-plaque de sabot et une deuxième face (46) perpendiculaire par rapport à la dite contre-plaque de sabot, le deuxième coin (38) étant mobile à translation sur une certaine distance dans une direction parallèle à la dite contre-plaque de sabot et comportant une première face (40) ayant la même inclinaison que la première face (42) du premier coin (36), avec laquelle elle est maintenue en contact, et une deuxième face (50) parallèle à la dite contre-plaque de sabot (22) et en contact avec celle-ci, le sens de mouvement des deux coins (36), (38) étant compris dans un plan rigoureusement parallèle à la direction dans laquelle agissent les forces exercées par le dit dispositif actionneur pour le déplacement des patins vers l'extérieur, la troisième face (64) du deuxième coin (38) prenant appui sur l'extrémité (68) de l'un (24) des deux sabots distante de l'extrémité sur laquelle agit le dit dispositif actionneur (26), l'extrémité correspondant de l'autre coin prenant appui directement sur la dite boîte (34), le premier coin (36) étant mobile en translation entre une première position de fonctionnement normal dans laquelle les deux extrémités relatives (68, 74) des patins sont séparées par leur distance maximum d'écartement, et une deuxième position dans laquelle les dites extrémités (68, 74) sont séparées par leur distance minimum d'écartement ; et

- un moyen de rappel élastique (60) faisant revenir le premier coin (36) sur sa première position lorsque le patin relatif (24) n'exerce aucune force quelconque sur le dit deuxième coin (38).

**2.** Un frein à tambour selon la revendication 1, caractérisé en ce que la première position du premier coin (36) est réglable.

**3.** Un frein à tambour selon la revendication 2, caractérisé en ce que le dit moyen de rappel élastique consiste en un ressort hélicoïdal pré-asservi (60) enroulé coaxialement autour d'un axe fileté (54) fixé sur le premier coin (36) et perpendiculaire à la contre-plaque de sabot (22), le dit axe (54) passant dans un trou (56) pratiqué dans la contre-plaque de sabot (22) et s'étendant au-delà de ce trou, une extrémité du ressort (60) prenant appui contre la contre-plaque de sabot (22), et l'autre extrémité du ressort prenant appui contre la base d'un capuchon d'écartement (58) coaxial à l'axe (54) et faisant face à la contre-plaque de sabot (22).

Fig.1

Fig.2

7

Fig. 5

Fig. 3

Fig. 4